# EUROPEAN PATENT SPECIFICATION

(11) **EP 3 842 276 B1**
(45) Date of publication and mention of the grant of the patent: **05.03.2025**
(21) Application number: 19895349.9
(22) Date of filing: 24.10.2019
(51) Int. Cl.: B60L 9/00, B60L 1/00, B60L 9/30, H02M 1/10, H02M 3/158, H02M 5/10, H02M 7/217

(54) **TRAIN AND MULTI-CURRENT POWER CONVERSION SYSTEM THEREOF**
ZUG UND MEHRSTROMLEISTUNGSUMWANDLUNGSSYSTEM DAFÜR
TRAIN ET SON SYSTÈME DE CONVERSION DE PUISSANCE MULTI-COURANT

(30) Priority: 11.12.2018 CN 201811511592
(43) Date of publication of application: 30.06.2021
(73) Proprietor: Zhuzhou CRRC Times Electric Co., Ltd., Zhuzhou, Hunan 412001 (CN)
(72) Inventor: ZOU, Dangbing, Zhuzhou, Hunan 412001 (CN); GUO, Junbo, Zhuzhou, Hunan 412001 (CN); XU, Shaolong, Zhuzhou, Hunan 412001 (CN); ZHANG, Zhibing, Zhuzhou, Hunan 412001 (CN); DING, Yi, Zhuzhou, Hunan 412001 (CN); LIU, Da, Zhuzhou, Hunan 412001 (CN)
(74) Representative: Frick, Robert
(86) International application number: PCT/CN2019/113011
(87) International publication number: WO 2020/119273

(56) References cited:
- EP-A2- 3 019 366
- EP-B1- 3 019 366
- CN-A- 104 467 455
- CN-A- 104 467 455
- CN-A- 104 477 054
- CN-A- 104 553 832
- CN-A- 107 627 862
- CN-A- 107 627 862
- KR-A- 20180 078 422

## Description

### FIELD

The present disclosure relates to the technical field of electric trains, and in particular to a train and a multi-current power conversion system thereof.

### BACKGROUND

In China, traditional alternating-current (AC) drive locomotives, electric multiple unit trains, and urban rail vehicles each can only operate under only one grid voltage system, such as 25kV/50Hz on the trunk line or DC1500V/750V on the urban rail railway. With the economic development, some cities have begun to try the seamless connection between the trunk line railway and the urban rail railway. That is, the train power conversion system can meet the requirements of two grid voltage systems.

The requirements on the power conversion system of the train are getting higher and higher nowadays. Under some occasions, the train power conversion system is required to be applicable to four grid voltage systems. Usually, it is required to be applicable to the four power supply systems of AC25kV/50Hz, AC15kV/16.7Hz, DC3000V and DC1500V. For example, the power supply systems in European and African railways are complicated due to historical reasons. When a train travels across countries and regions, the train needs to be applicable to these four power supply systems.

In summary, it is desired to solve the problem of how to make the train power conversion system meet at least four commonly used power supply systems.

CN107627862 discloses multi-thread convertor equipment connected to an AC power supply and a DC power supply via a traction transformer, an AC circuit breaker and a DC circuit breaker. The equipment comprises an AC pre-charge circuit, a DC pre-charge circuit, an isolation conversion switch set, a PWM rectifier, a secondary resonant circuit, an intermediate DC circuit, a VVVF inverter and a VVVF auxiliary inverter. Switches of a plurality of power supplying modes can be achieved via the isolation conversion switch set; the equipment can work at two or more power supplying modes; a deficiency of single use of power supply mode of the traction converter in the prior art can be overcome; the equipment can meet seamless connection between main national line railways and urban railways in the future, and is suitable for various power supplying modes of foreign railways; trans-area and trans-nation transportation demands can be obtained; and the multi-thread convertor equipment can be also suitable for railway power supplying modes of China, African and European areas.

### SUMMARY

The object of the present disclosure is to provide a train and a multi-current power conversion system thereof, to be applicable to at least four commonly used power supply systems.

To solve the above technical problems, the present disclosure provides the technical solutions as set forth in independent claim 1.

With the technical solution provided by the embodiments of the present disclosure, at least two DC grid voltage systems and at least two AC grid voltage systems can be supported. For various alternating-current power with different voltage levels received by the transformation module, the transformation module can output, via its first and second output terminals, alternating-current power with the fixed voltage level to the rectifier, so that a voltage of a fixed level is applied to the post-circuit. When receiving alternating-current power, the inductor module connects its first terminal to its second terminal and regulates an equivalent inductance between its first and second terminals to a preset equivalent inductance corresponding to the alternating-current power, which means that the intermediate filter circuit meets the requirements of the current voltage. When receiving direct-current power, the transformation module outputs, via its third output terminal, the direct-current power to the second terminal of the inductor module. At this time, the second terminal of the inductor module is connected to the third terminal of the inductor module, and therefore the direct-current power is inputted into the rectifier via the target switching unit. The voltage provided to the post-circuit is controlled to be unchanged by controlling the on/off states of controllable switches of the rectifier. Thus, the solution of the present disclosure supports at least four types of grid voltage systems.

### BRIEF DESCRIPTION OF THE DRAWINGS

Figure 1 shows a structural schematic diagram of a multi-current power conversion system for a train;
Figure 2 shows a structural schematic diagram of a multi-current power conversion system for a train according to a first embodiment of the present disclosure;
Figure 3 shows a structural schematic diagram of a multi-current power conversion system for a train according to a second embodiment of the present disclosure.

### DETAILED DESCRIPTION OF EMBODIMENTS

The core of the present disclosure is to provide a multi-current power conversion system for a train that can support at least four grid voltage systems.

In order to make the solution of the present disclosure better understood by those skilled in the art, the embodiments are described in detail with reference to the accompanying drawings and specific embodiments.

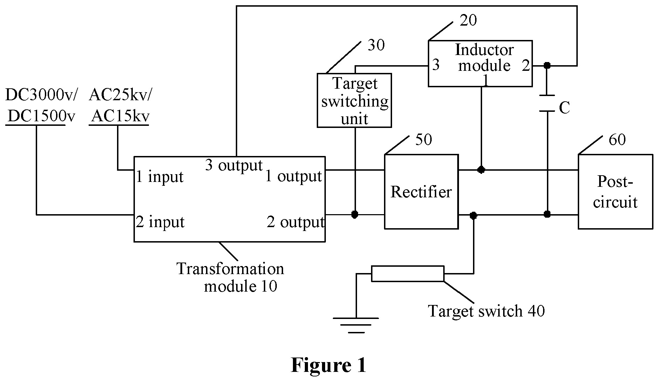

Reference is made to Figure 1, which shows a structural schematic diagram of a multi-current power conversion system for a train. The multi-current power conversion system for a train includes a transformation module 10, an inductor module 20, a target switching unit 30, a target switch 40, a rectifier 50, a first capacitor C, and a post-circuit 60.

The transformation module 10 has a first input terminal connected to an AC input and a second input terminal connected to a DC input. The transformation module 10 is configured to output, when receiving an alternating-current power of any voltage level, an alternating-current power of a fixed voltage level to the rectifier 50 via a first output terminal and a second output terminal of the transformation module 10. The transformation module 10 is also configured to output, when receiving an direct-current power, the received direct-current power to a second terminal of the inductor module 20 via a third output terminal of the transformation module 10. The number of types of the AC power is N, and the number of types of the DC power is *M,* and *N*≥2, *M*≥2.

It is understood that, in the present disclosure, the transformation module 10 receives alternating-current power with different voltages at different times, not at the same time. The same is true for direct-current power.

The transformation module 10 receives the AC input via the first input terminal. For example, the first input terminal is used to receive the two inputs of AC25kV and AC15kV as shown in Figure 1. The transformation module 10 receives the DC input via the second input terminal. For example, the second input terminal is used to receive the two inputs of DC3000V and DC1500V as shown in Figure 1. In Figure 1, in order to distinguish the terminals, "1 input" refers to the first input terminal of the transformation module 10, "2 input" refers to the second input terminal of the transformation module 10, "1 output" refers to the first output terminal of the transformation module 10, "2 output" refers to the second output terminal of the transformation module 10, and "3 output" refers to the third output terminal of the transformation module 10. For the inductor module 20, "1", "2", and "3" respectively refer to the first terminal, the second terminal, and the third terminal of the inductor module 20.

For received alternating-current power with different voltage levels, the transformation module 10 can regulate the states of its devices so that the first output terminal and the second output terminal of the transformation module 10, used as the output terminals for alternating-current power, can output alternating-current power with a fixed voltage level to a rectifier 50. When direct-current power is received, the transformation module 10 does not change the voltage level of the received direct-current power, but directly output the direct-current power via the third output terminal of the transformation module 10. It should be noted that when direct-current power are received, the transformation module 10 generally keeps a state of disconnection between its first output terminal and its second input terminal, and also a state of disconnection between its second output terminal and its second input terminal.

The inductor module 20 has a first terminal connected to a first output terminal of the rectifier 50, a second terminal connected to a first terminal of the first capacitor and the third output terminal of the transformation module 10, and a third terminal connected to a first terminal of the target switching unit 30. The inductor module 20 is configured to, when the transformation module receives *k*^{th} alternating-current power, connect its first terminal to its second terminal, and regulate an equivalent inductance between its first terminal and its second terminal to a preset equivalent inductance corresponding to the *k*^{th} alternating-current power, where *k* is an integer and *N*≥*k*≥1. The inductor module 20 is also configured to, when the transformation module receives the direct-current power, break the connection between its first terminal and its second terminal, and connect its second terminal to its third terminal.

In practice, different grid voltage systems may have different voltage frequencies, in addition to different voltage levels. Thus, for different types of AC inputs, corresponding filter circuits should be provided in the intermediate circuit for filtering. The requirements for filtering different types of AC inputs are met by regulating the inductor module 20 in the solution of the present disclosure. When the transformation module 10 receives *k*^{th} alternating-current power, the inductor module 20 connects its first terminal to its second terminal and regulates an equivalent inductance between its first terminal and its second terminal to a preset equivalent inductance corresponding to the *k*^{th} alternating-current power, so that the filter circuit in the intermediate circuit meets the requirements for the alternating-current power with the frequency. In other words, for different received alternating-current power, the equivalent inductance between the first terminal and the second terminal of the inductor module 20 is different, so as to meet different filtering requirements for alternating-current power with different frequencies.

When the transformation module 10 receives direct-current power, the inductor module 20 controls to break the connection between its first terminal and its second terminal and connects its second terminal to its third terminal so that the direct-current power is inputted from the second terminal of the inductor module 20 and outputted from the third terminal of the inductor module 20.

The specific structure of the inductor module 20 can be designed according to actual needs, as long as it can meet the requirements of the solution of the present disclosure.

The target switch 40 has a first terminal connected to a second output terminal of the rectifier 50 and a second terminal connected to ground.

Both the target switch 40 and the target switching unit 30 may be commonly used switching devices. For example, they may both be isolating switches. That is, the switch and the switching unit are not necessarily to be of different switch forms.

The first capacitor C has a second terminal connected to the second output terminal of the rectifier 50.

The type and specific parameters of the first capacitor C can be designed according to actual needs. For example, the first capacitor C is implemented as an electrolytic capacitor suitable for high-voltage occasions. In the alternating current mode, the first capacitor C and the inductor module 20 serve as an intermediate filter circuit to filter the output of the rectifier 50.

The post-circuit 60 has a first output terminal connected to the first output terminal of the rectifier 50 and a second terminal connected to the second output terminal of the rectifier 50. The post-circuit 60 is configured to supply power to a load.

The specific structure of the post-circuit 60 can be designed as an existing post-circuit, which may usually be an inverter circuit. In the solution of the present disclosure, the post-circuit 60 is not required to be changed.

The target switching unit 30 has a second terminal connected to the second input terminal of the rectifier 50. Both the target switch 40 and the target switching unit 30 are turned on only when the transformation module 10 receives direct-current power.

The rectifier 50 is configured to control, for different direct-current power received by the transformation module 10, the on/off state of switching devices of the rectifier 50 according to a rule, to provide the a voltage of a fixed level to the post-circuit 60.

When the transformation module 10 receives direct-current power, the target switching unit 30 is turned on so that the direct-current power can be input to the second input terminal of the rectifier 50 via the target switching unit 30. When the target switch 40 is connected to the ground, the rectifier 50 and the inductor module 20 form a boost circuit. By controlling the on/off state of switching devices in the rectifier 50, i.e. regulating the duty cycle, the boost ratio can be regulated so that, for different direct-current power received by the transformation module 10, the voltage of the fixed level is provided to the post-circuit 60. If the voltage of the direct-current power received by the transformation module 10 is large power meeting the voltage requirements for the post-circuit 60, the rectifier 50 may be controlled not to boost the voltage.

In the solution of the present disclosure, for different received alternating-current power or direct-current power, states of only the transformation module 10, the inductor module 20, the target switching unit 30, and the target switch 40 are regulated, and the specification of the rectifier 50 and the post-circuit 60 do not have to be changed. That is, a same specification of the rectifier 50 and the post-circuit 60 can be applied to at least four grid voltage systems.

With the technical solution provided by the embodiments of the present disclosure, at least two DC grid voltage systems and at least two AC grid voltage systems can be supported. For various alternating-current power with different voltage levels received by the transformation module, the transformation module can output, via its first and second output terminals, alternating-current power with the fixed voltage level to the rectifier, so that a voltage of a fixed level is applied to the post-circuit. When receiving alternating-current power, the inductor module connects its first terminal to its second terminal and regulates an equivalent inductance between its first and second terminals to a preset equivalent inductance corresponding to the alternating-current power, which means that the intermediate filter circuit meets the requirements of the current voltage. When receiving direct-current power, the transformation module outputs, via its third output terminal, the direct-current power to the second terminal of the inductor module. At this time, the second terminal of the inductor module is connected to the third terminal of the inductor module, and therefore the direct-current power is inputted into the rectifier via the target switching unit. The voltage provided to the post-circuit is controlled to be unchanged by controlling the on/off states of controllable switches of the rectifier. Thus, the solution of the present disclosure supports at least four types of grid voltage systems.

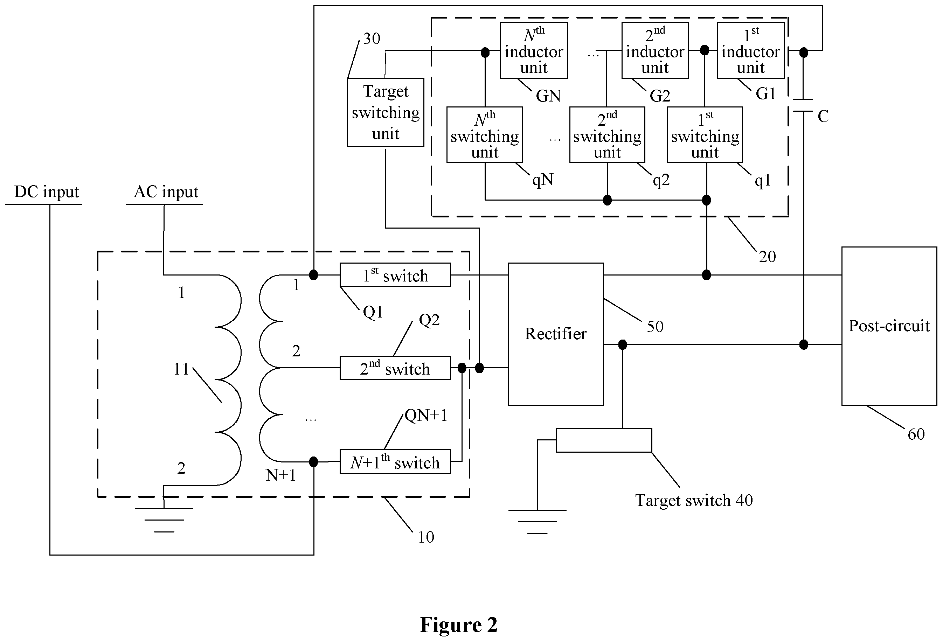

In an embodiment of the present disclosure, referring to Figure 2, the transformation module 10 includes a traction transformer 11 and *N*+1 switches.

A first terminal of a primary winding of the traction transformer 11 functions as the first input terminal of the transformation module 10 and is connected to the AC input. A second terminal of the primary winding of the traction transformer 11 is connected to the ground. A secondary winding of the traction transformer 11 is arranged sequentially with *N*+1 terminals. The *N*+1^{th} terminal of the secondary winding functions as the second input terminal of the transformation module 10. The 1^{st} terminal of the secondary winding functions as the third output terminal of the transformation module 10. The 1^{st} terminal of the secondary winding and the first terminal of the primary winding are homonymous terminals of the traction transformer 11.

In the N+1 switches, a first terminal of a 1^{st} switch Q1 is connected to the 1^{st} terminal of the secondary winding, and a second terminal of the 1^{st} switch Q1 functions as the first output terminal of the transformation module 10, and is used to connect to the first input terminal of the rectifier 50. A first terminal of an *i*^{th} switch is connected to the *i*^{th} terminal of the secondary winding, and a second terminal of the *i*^{th} switch is connected to the second input terminal of the rectifier 50, where *i* is an integer and 2≤*i*≤*N*+1.

Voltages of the 1^{st} to the *N*^{th} types of alternating-current power received by the transformation module 10 sequentially decreases. The 1^{st} switch Q1 is turned on only when alternating-current power is received by the traction transformer 11, and the *i*^{th} switch is turned on only when the *i*-1^{th} alternating-current power is received by the traction transformer 11.

In the embodiment in Figure 2, the secondary winding is arranged with N+1 output terminals, which is sequentially referred to as the 1^{st} terminal, the 2^{nd} terminal, ..., and the *N*+1^{th} terminal of the secondary winding. The 1^{st} terminal of the secondary winding and the first terminal of the primary winding are homonymous terminals of the traction transformer 11, and correspondingly, the *N*+1^{th} terminal of the secondary winding and the second terminal of the primary winding are homonymous terminals of the traction transformer 11. When receiving alternating-current power with a voltage, the voltage between the 1^{st} and 2^{nd} terminals of the secondary winding is the lowest, the voltage between the 1^{st} and 3^{rd} terminals of the secondary winding is the second lowest, and the voltage between the 1^{st} and *N+*1^{th} terminals of the secondary winding is the highest.

The 1^{st} switch Q1 is connected to the 1^{st} terminal of the secondary winding and the first input terminal of the rectifier 50. When alternating-current power is received, the 1^{st} switch Q1 remains a turned-on state. The 2^{nd} switch Q2 to the *N*+1^{th} switch QN+1 are each connected to the corresponding terminal of the secondary winding and are all connected to the second input terminal of the rectifier 50.

In this embodiment, the *N* types of alternating-current power are sequentially referred to as 1^{st} alternating-current power, 2^{nd} alternating-current power,..., and *N*^{th} alternating-current power in a descending order of their voltage levels. That is, the voltage of the 1^{st} alternating-current power is the highest, and the voltage of the *N*^{th} alternating-current power is the lowest. When the 1^{st} alternating-current power is received, the 1^{st} switch Q1 and the 2^{nd} switch Q2 are turned on, and the 3^{rd} switch Q3 to the *N*+1^{th} switch Q*N*+1 are all turned off. When the 2^{nd} alternating-current power is received, among the *N*+1 switches, the 1^{st} switch Q1 and the 3^{rd} switch Q3 are turned on and the other switches are turned off. That is, when the *i*-1^{th} alternating-current power is received, among the *N*+1 switches, only the 1^{st} switch Q1 and the *i*^{th} switch are turned on, where *i* is an integer and 2≤*i*≤*N*+1.

In practices, the specific number of the secondary winding terminals and the position on the secondary winding of each terminal can be designed according to actual situations. Generally, the secondary winding terminals are designed according to the respective voltages of the *N* types of alternating-current power supported by the train. In this embodiment, the regulation of voltages of different alternating-current power is realized through the *N+1* switches, which is simple and convenient to implement.

In an embodiment of the present disclosure, the inductor module 20 may include N inductor units and N switching units.

Among the *N* inductor units, a second terminal of a *j*^{th} inductor unit is connected to a first terminal of a *j*-1^{th} inductor unit, where *j* is an integer and 2≤*j*≤*N.* A second terminal of a 1^{st} inductor unit G1 functions as the second terminal of the inductor module 20. A first terminal of an *N*^{th} inductor unit G*N* functions as the third terminal of the inductor module 20.

Among the *N* switching units, a first terminal of an *m*^{th} switching unit is connected to a first terminal of the *m*^{th} inductor unit, and a second terminal of the *m*^{th} switching unit is connected to the first output terminal of the rectifier 50, where *m* is an integer and 1≤*m*≤*N.* The *m*^{th} switching unit is turned on only when the *m*^{th} alternating-current power is received by the transformation module 10.

In this embodiment, *N* inductor units are connected in series, and the equivalent inductance between the first terminal and the second terminal of the inductor module 20 is changed through turning on or off the *N* switching units. Specifically, when the 1^{st} alternating-current power is received, among the *N* switching units, only the 1^{st} switching unit q1 is turned on. At this time, the equivalent inductance between the first terminal and the second terminal of the inductor module 20 is the equivalent inductance of the 1^{st} inductor unit. When the 2^{nd} alternating-current power is received, among the N switching units, only the 2^{nd} switching unit q2 is turned on. At this time, the equivalent inductance between the first terminal and the second terminal of the inductor module 20 is the sum of the equivalent inductance of the 1^{st} inductor unit G1 and the equivalent inductance of the 2^{nd} inductor unit G2.

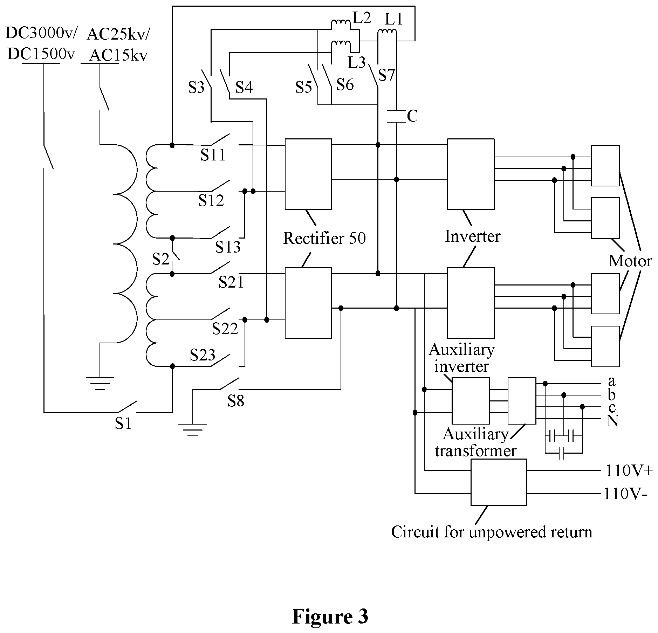

The internal structure of each inductor unit can be designed according to actual needs, which may be simply one inductor, or may be a combination of multiple inductors. For example, the inductor L2 and the inductor L3 can be regarded as the second inductor unit G2 in the implementation of Figure 3. The *N* switching units may generally be isolating switches.

It should be noted that a specific method for regulating the on/off state of the *N* switching units is described in this embodiment. In other embodiments, the on/off state of each switching unit can be controlled according to different frequencies of the received alternating-current power. In addition, other switching forms can be used to control the inductor module 20. That is, the specific structure of the inductor module 20 can be implemented in other ways, as long as the state of the inductor module 20 can meet the requirements on the inductance in the filter circuit for different received alternating-current power.

In an embodiment of the present disclosure, the N switches and the target switch 40 may all be arranged in a first isolating switch box, and the N switching units and the target switching unit 30 may all be arranged in a second isolating switch box, so as to facilitate the control of the on/off state of each switching unit and each switch. With this configuration, the external interface of the traction converter form by the rectifier 50 and the post-circuit 60 does not need to be changed. That is, the traction converter itself does not have a state switch, which is convenient for implementation.

Further, the traction transformer 11 and the traction converter are generally installed at the bottom of different carriages, leading to a long distance. Therefore, the first isolating switch box and the second isolating switch box may be arranged at the carriage where the traction transformer 11 is located, so as to shorten the length of electrical wires, reduce the difficulty of wiring, and improve the electromagnetic compatibility of the whole train.

In an embodiment of the present disclosure, referring to Figure 3, the system further includes an auxiliary inverter circuit having a first input terminal connected to the first output terminal of the rectifier 50 and a second input terminal connected to the second output terminal of the rectifier 50.

The auxiliary inverter circuit may include an auxiliary inverter and an auxiliary transformer, configured to convert the direct-current power into a three-phase alternating-current power of variable frequency and variable voltage, to supply power to an auxiliary load of the train.

In an embodiment of the present disclosure, the system may further include a circuit for unpowered return. The circuit for unpowered return has a first input terminal connected to the first output terminal of the rectifier 50 and a second input terminal connected to the second output terminal of the rectifier 50. The circuit for unpowered return is generally used for achieving the function of unpowered return under a rescue mode.

It should be noted that, in the embodiment shown in Figure 3, the train power conversion system includes two rectifiers 50 and the post-circuits respectively connected to the rectifiers 50. That is, two power supply systems are provide, with some devices being reused. For example, it is not necessary to arrange two transformation modules, but only one double-secondary-winding traction transformer may be arranged, having three output terminals at each secondary winding. The two power supply systems can share one inductor module which includes an inductor L1, an inductor L2, an inductor L3, a switch S5, a switch S6, and a switch S7.

It should further be noted that, in this embodiment, the inductor L2 and the inductor L3may be replaced by only one inductor. That is, a terminal of the inductor is connected to the inductor L1 and the other terminal of the inductor is connected to the second input terminals of both the two rectifiers 50. The embodiment shown in Figure 3 is equivalent to separately arranging DC circuits for the two power supply systems. That is, by individually controlling the on/off states of S3 and S4, the on/off state of the DC circuits can be individually controlled. In addition, an isolating switch S2 is added since two secondary windings are used. The isolating switch S2 is turned off when alternating-current power is received, and is turned on when direct-current power is received. In the embodiment shown in Figure 3, *N* and Mboth are equal to 2. Further, in Figure 3, a switch S1 is arranged on the DC power supply circuit, to control the on/off state of the DC input.

Among the 14 isolating switches in Figure 3, i.e., S1, S2, S3, S4, S5, S6, S7, S8, S21, S22, S23, S11, S12, S13, when the train receives an AC25kV/50Hz input, the isolating switches S11, S12, S21, S22, and S7 are turned on and the other switches are turned off. The suitable secondary winding is selected by turning on S12 and S22. The suitable secondary resonance inductance is selected by turning on S7. The AC voltage of the secondary winding is rectified and then output to the intermediate circuit. The intermediate circuit eliminates the second harmonic of the intermediate voltage. The inverter converts the direct-current power into a three-phase alternating-current power to supply power to the traction motor. The auxiliary inverter converts the direct-current power into a variable-frequency and variable-voltage three-phase alternating-current power to supply power to the auxiliary load of the train. When the train receives an AC15kV/16.7Hz input, the isolating switches S11, S13, S21, S23, S5, and S6 are turned on and the others of the 14 isolating switches are turned off.

When the train receives an input of either DC3000V or DC1500V, among the 14 isolating switches, the isolating switches S1, S2, S3, S4, and S8 are turned on and the others are turned off. The grid voltage is input to the rectifier 50 through the secondary winding and a secondary filter reactor, and then flows into the intermediate circuit through the rectifier 50. The inverter converts the direct-current power into a variable-frequency and variable-voltage three-phase alternating-current power to supply power to the traction motor. The auxiliary inverter converts the direct-current power into a constant frequency and constant voltage alternating-current power to supply power to the auxiliary load of the train. The secondary filter reactor described here is the equivalent reactance formed by L1, L2 and L3.

When the train receives a DC3000V input, the rectifier 50 may not boost the DC input. However, when the train receives a DC1500V input, by controlling the switching devices in the rectifier 50, the rectifier 50 realizes the function of boosting and chopping, so as to increase the intermediate voltage to DC3000V to supply power to the inverter.

Considering that the rectifier 50 of the present disclosure cooperates with the secondary filter reactor to achieve voltage boosting, the rectifier 50 may generally be a four-quadrant rectifier 50. Furthermore, the four-quadrant rectifier 50 is preferably a PWM four-quadrant rectifier 50.

The embodiments of the present disclosure also provide a train, which may include the multi-current power conversion system for a train in any of the foregoing embodiments. Reference may be made to the above embodiments for details of the train, which is not repeated here.

## Claims

1. A multi-current power conversion system for use with
a train, comprising:
a transformation module (10), having a first input terminal connected to an alternating-current input and a second input terminal connected a direct-current input, wherein the transformation module (10) is configured to, for received alternating-current power of different voltage levels, output alternating-current power of a fixed voltage level to a rectifier (50) via a first output terminal and a second output terminal, and for received direct-current power, output the received direct-current power to a second terminal of an inductor module (20) via a third output terminal; wherein a number of types of the alternating-current power is *N,* a number of types of the direct-current power is *M,* and *N*≥*2, M*≥2;
the inductor module (20), having a first terminal connected to a first output terminal of the rectifier (50), a second terminal connected to a first terminal of a first capacitor and the third output terminal of the transformation module (10), and a third terminal connected to a first terminal of a target switching unit (30), wherein the inductor module (20) is configured to, when the transformation module (10) receives *k*^{th} alternating-current power, connect a first terminal of the inductor module (20) to the second terminal of the inductor module (20), and regulate an equivalent inductance between the first terminal of the inductor module (20) and the second terminal of the inductor module (20) to a preset equivalent inductance corresponding to the *k*^{th} alternating-current power, wherein *k* is an integer and *N*≥*k*≥1;
a target switch (40), having a first terminal connected to a second output terminal of the rectifier (50) and a second terminal connected to ground;
the first capacitor, having a second terminal connected to the second output terminal of the rectifier (50);
a post-circuit (60), having a first input terminal connected to the first output terminal of the rectifier (50) and a second input terminal connected to the second output terminal of the rectifier (50), and the post-circuit (60) is configured to supply power to a load;
the target switching unit (30), having a second terminal connected to a second input terminal of the rectifier (50), wherein the target switch (40) and the target switching unit (30) are turned on only when the transformation module (10) receives the direct-current power; and
the rectifier (50), configured to, for different direct-current power received by the transformation module (10), control an on/off state of a switching device of the rectifier (50) according to a rule, to provide a voltage of a fixed level to the post-circuit (60),
wherein the transformation module (10) comprises:
a traction transformer, wherein a first terminal of a primary winding of the traction transformer functions as the first input terminal of the transformation module (10) and is connected to the alternating-current input, a second terminal of the primary winding is connected to ground, and a secondary winding of the traction transformer is arranged sequentially with N+1 terminals; and
*N+1* switches respectively connected to the *N+1* terminals of the secondary winding of the traction transformer,
**characterized in that**:
the inductor module (20) is also configured to, in a case that the transformation module (10) receives the M types of the direct-current power, disconnect the first terminal of the inductor module (20) from the second terminal of the inductor module (20), and connect the second terminal of the inductor module (20) to the third terminal of the inductor module (20);
the *N*+1^{th} terminal of the secondary winding functions as the second input terminal of the transformation module (10) and is connected the direct-current input, the 1^{st} terminal of the secondary winding functions as the third output terminal of the transformation module (10), the 1^{st} terminal of the secondary winding and the first terminal of the primary winding are homonymous terminals of the traction transformer;
wherein a first terminal of a 1^{st} switch is connected to the 1^{st} terminal of the secondary winding, a second terminal of the 1^{st} switch functions as the first output terminal of the transformation module (10), and is connect to the first input terminal of the rectifier (50), a first terminal of an *i*^{th} switch is connected to the *i*^{th} terminal of the secondary winding, and a second terminal of the *i*^{th} switch is connected to the second input terminal of the rectifier (50), wherein *i* is an integer and 2≤*i*≤*N*+1; and
voltages of first to *N^{th}* types of alternating-current power received by the transformation module (10) sequentially decreases, and the 1^{st} switch is turned on only when the alternating-current power is received by the traction transformer, and the *i*^{th} switch is turned on only when the *i*-1^{th} type of alternating-current power is received by the traction transformer.

2. The multi-current power conversion system for use with a train according to claim 1, wherein the
inductor module (20) comprises:
N inductor units, wherein a second terminal of a *j*^{th} inductor unit is connected to a first terminal of a *j*-1^{th} inductor unit, wherein *j* is an integer and 2≤*j*≤*N*; a second terminal of a 1^{st} inductor unit functions as the second terminal of the inductor module (20); a first terminal of a *N*^{th} inductor unit functions as the third terminal of the inductor module (20); and
*N* switching units, wherein a first terminal of an *m*^{th} switching unit is connected to a first terminal of an *m*^{th} inductor unit, and a second terminal of the *m*^{th} switching unit is connected to the first output terminal of the rectifier (50), where *m* is an integer and 1≤*m*≤*N*; the *m*^{th} switching unit is turned on only when the *m*^{th} type of alternating-current power is received by the transformation module (10).

3. The multi-current power conversion system for use with a train according to claim 2, wherein N
of the switches and the target switch (40) are all arranged in a first isolating switch box, and the N switching units and the target switching unit (30) are all arranged in a second isolating switch box.

4. The multi-current power conversion system for use with a train according to claim 1, wherein *N*
is equal to 2 and *M* is equal to 2.

5. The multi-current power conversion system for use with a train according to claim 1, further
comprising:
an auxiliary inverter circuit having a first input terminal connected to the first output terminal of the rectifier (50) and a second input terminal connected to the second output terminal of the rectifier (50).

6. The multi-current power conversion system for use with a train according to claim 5, further comprising:
a circuit for unpowered return, having a first input terminal connected to the first output terminal of the rectifier (50) and a second input terminal connected to the second output terminal of the rectifier (50).

7. The multi-current power conversion system for use with a train according to any one of claims 1
to 6, wherein the rectifier (50) is a four-quadrant rectifier (50).

8. The multi-current power conversion system for use with a train according to claim 7, wherein the
four-quadrant rectifier (50) is a PWM four-quadrant rectifier (50).

9. A train, comprising the multi-current power conversion system for a train according to any one of claims 1 to 8.

## Patentansprüche

1. Mehrstrom-Leistungsumwandlungssystem zur Verwendung mit einem Zug, umfassend:
ein Transformationsmodul (10) mit einem ersten Eingangsanschluss, der mit einem Wechselstromeingang verbunden ist, und einem zweiten Eingangsanschluss, der mit einem Gleichstromeingang verbunden ist, wobei das Transformationsmodul (10) so konfiguriert ist, dass es für empfangene Wechselstromleistung unterschiedlicher Spannungspegel Wechselstromleistung eines festen Spannungspegels über einen ersten Ausgangsanschluss und einen zweiten Ausgangsanschluss an einen Gleichrichter (50) ausgibt, und für empfangene Gleichstromleistung die empfangene Gleichstromleistung über einen dritten Ausgangsanschluss an einen zweiten Anschluss eines Induktivitätenmoduls (20) ausgibt; wobei eine Anzahl von Arten der Wechselstromleistung N ist, eine Anzahl von Arten der Gleichstromleistung M ist und N ≥ 2, M ≥ 2;
das Induktivitätenmodul (20) mit einem ersten Anschluss, der mit einem ersten Ausgangsanschluss des Gleichrichters (50) verbunden ist, einem zweiten Anschluss, der mit einem ersten Anschluss eines ersten Kondensators und dem dritten Ausgangsanschluss des Transformationsmoduls (10) verbunden ist, und einem dritten Anschluss, der mit einem ersten Anschluss einer Zielschalteinheit (30) verbunden ist, wobei das Induktivitätenmodul (20) so konfiguriert ist, dass es, wenn das Transformationsmodul (10) k^{ten}-Wechselstromleistung empfängt, einen ersten Anschluss des Induktivitätenmoduls (20) mit dem zweiten Anschluss des Induktivitätenmoduls (20) verbindet und eine äquivalente Induktanz zwischen dem ersten Anschluss des Induktivitätenmoduls (20) und dem zweiten Anschluss des Induktivitätenmoduls (20) auf eine voreingestellte äquivalente Induktanz entsprechend der k^{-ten} Wechselstromleistung reguliert, wobei k^{ten} eine ganze Zahl ist und N ≥ k ≥ 1;
einen Zielschalter (40) mit einem ersten Anschluss, der mit einem zweiten Ausgangsanschluss des Gleichrichters (50) verbunden ist, und einem zweiten Anschluss, der mit Masse verbunden ist;
den ersten Kondensator mit einem zweiten Anschluss, der mit dem zweiten Ausgangsanschluss des Gleichrichters (50) verbunden ist;
eine Nachschaltung (60) mit einem ersten Eingangsanschluss, der mit dem ersten Ausgangsanschluss des Gleichrichters (50) verbunden ist, und einem zweiten Eingangsanschluss, der mit dem zweiten Ausgangsanschluss des Gleichrichters (50) verbunden ist, und die Nachschaltung (60) so konfiguriert ist, dass sie eine Last mit Energie versorgt;
die Zielschalteinheit (30) mit einem zweiten Anschluss, der mit einem zweiten Eingangsanschluss des Gleichrichters (50) verbunden ist, wobei der Zielschalter (40) und die Zielschalteinheit (30) nur dann eingeschaltet werden, wenn das Transformationsmodul (10) die Gleichstromleistung empfängt; und
den Gleichrichter (50), der so konfiguriert ist, dass er für unterschiedliche Gleichstromleistungen, die von dem Transformationsmodul (10) empfangen werden, einen Ein/Aus-Zustand einer Schaltvorrichtung des Gleichrichters (50) gemäß einer Regel steuert, um eine Spannung mit einem festen Pegel an die Nachschaltung (60) bereitzustellen,
wobei das Transformationsmodul (10) Folgendes umfasst:
einen Traktionstransformator, wobei ein erster Anschluss einer Primärwicklung des Traktionstransformators als der erste Eingangsanschluss des Transformationsmoduls (10) fungiert und mit dem Wechselstromeingang verbunden ist, ein zweiter Anschluss der Primärwicklung mit Masse verbunden ist und eine Sekundärwicklung des Traktionstransformators aufeinanderfolgend mit N+1-Anschlüssen angeordnet ist; und
N+1-Schalter, die jeweils mit den N+1-Anschlüssen der Sekundärwicklung des Traktionstransformators verbunden sind,
**dadurch gekennzeichnet, dass**:
das Induktivitätenmodul (20) auch so konfiguriert ist, dass es in einem Fall, in dem das Transformationsmodul (10) die M-Arten der Gleichstromleistung empfängt, den ersten Anschluss des Induktivitätenmoduls (20) von dem zweiten Anschluss des Induktivitätenmoduls (20) zu trennen und den zweiten Anschluss des Induktivitätenmoduls (20) mit dem dritten Anschluss des Induktivitätenmoduls (20) zu verbinden;
der N+1^{ten}-Anschluss der Sekundärwicklung als zweiter Eingangsanschluss des Transformationsmoduls (10) fungiert und mit dem Gleichstromeingang verbunden ist, der 1. Anschluss der Sekundärwicklung als dritter Ausgangsanschluss des Transformationsmoduls (10) fungiert, der 1. Anschluss der Sekundärwicklung und der erste Anschluss der Primärwicklung homonyme Anschlüsse des Traktionstransformators sind;
wobei ein erster Anschluss eines 1. Schalters mit dem 1. Anschluss der Sekundärwicklung verbunden ist, ein zweiter Anschluss des 1. Schalters als erster Ausgangsanschluss des Transformationsmoduls (10) fungiert und mit dem ersten Eingangsanschluss des Gleichrichters (50) verbunden ist, eine erster Anschluss eines i^{ten} Schalters mit dem i^{ten} Anschluss der Sekundärwicklung verbunden ist und ein zweiter Anschluss des i^{ten} Schalters mit dem zweiten Eingangsanschluss des Gleichrichters (50) verbunden ist, wobei i eine ganze Zahl ist und 2 ≤ i ≤ N + 1; und
Spannungen der ersten bis N^{ten} Arten von Wechselstromleistung, die vom Transformationsmodul (10. ) empfangen werden, nacheinander abnehmen, und der i^{ten} Schalter nur dann eingeschaltet wird, wenn die Wechselstromleistung von dem Traktionstransformator empfangen wird, und der i^{ten} Schalter nur dann eingeschaltet wird, wenn die i-1^{ten} Art der Wechselstromleistung durch den Traktionstransformator empfangen wird.

2. Mehrstrom-Leistungsumwandlungssystem zur Verwendung mit einem Zug nach Anspruch 1, wobei das Induktivitätenmodul (20) Folgendes umfasst:
N-Induktivitätseinheiten, wobei ein zweiter Anschluss einer j^{ten} Induktivitätseinheit mit einem ersten Anschluss einer i-1^{ten} Induktivitätseinheit verbunden ist, wobei j eine ganze Zahl ist und 2 ≤ j ≤ N; ein zweiter Anschluss einer 1. Induktivitätseinheit als der zweite Anschluss des Induktivitätenmoduls (20) fungiert; ein erster Anschluss einer N^{ten} Induktivitätseinheit als der dritte Anschluss des Induktivitätenmoduls (20) fungiert; und
N-Schalteinheiten, wobei ein erster Anschluss einer m^{ten} Schalteinheit mit einem ersten Anschluss einer m^{ten} Induktivitätseinheit verbunden ist, und ein zweiter Anschluss der m^{ten} Schalteinheit mit dem ersten Ausgangsanschluss des Gleichrichters (50) verbunden ist, wobei m eine ganze Zahl ist und 1≤m≤N, wobei die m^{ten} Schalteinheit nur dann eingeschaltet wird, wenn die m^{ten} Art der Wechselstromleistung von dem Transformationsmodul (10) empfangen wird.

3. Mehrstrom-Leistungsumwandlungssystem zur Verwendung mit einem Zug nach Anspruch 2, wobei N der Schalter und der Zielschalter (40) alle in einem ersten Trennschaltkasten angeordnet sind und die N-Schalteinheiten und die Zielschalteinheiten (30) alle in einem zweiten Trennschaltkasten angeordnet sind.

4. Mehrstrom-Leistungsumwandlungssystem zur Verwendung mit einem Zug nach Anspruch 1, wobei N gleich 2 und M gleich 2 ist.

5. Mehrstrom-Leistungsumwandlungssystem zur Verwendung mit einem Zug nach Anspruch 1, ferner umfassend:
eine Hilfswechselrichterschaltung mit einem ersten Eingangsanschluss, der mit dem ersten Ausgangsanschluss des Gleichrichters (50) verbunden ist, und einem zweiten Eingangsanschluss, der mit dem zweiten Ausgangsanschluss des Gleichrichters (50) verbunden ist.

6. Mehrstrom-Leistungsumwandlungssystem zur Verwendung mit einem Zug nach Anspruch 5, ferner umfassend:
eine Schaltung für Rückführung ohne Energieversorgung mit einem ersten Eingangsanschluss, der mit dem ersten Ausgangsanschluss des Gleichrichters (50) verbunden ist, und einem zweiten Eingangsanschluss, der mit dem zweiten Ausgangsanschluss des Gleichrichters (50) verbunden ist.

7. Mehrstrom-Leistungsumwandlungssystem zur Verwendung mit einem Zug nach einem der Ansprüche 1 bis 6, wobei der Gleichrichter (50) ein Vier-Quadranten-Gleichrichter (50) ist.

8. Mehrstrom-Leistungsumwandlungssystem zur Verwendung mit einem Zug nach Anspruch 7, wobei der Vier-Quadranten-Gleichrichter (50) ein PWM-Vier-Quadranten-Gleichrichter (50) ist.

9. Zug, umfassend das Mehrstrom-Leistungsumwandlungssystem für einen Zug nach einem der Ansprüche 1 bis 8.

## Revendications

1. Système de conversion de puissance à courants multiples destiné à être utilisé avec un train, comprenant :
un module de transformation (10) présentant une première borne d'entrée connectée à une entrée de courant alternatif et une deuxième borne d'entrée connectée à une entrée de courant continu, dans lequel le module de transformation (10) est configuré pour, pour une puissance de courant alternatif reçue de différents niveaux de tension, délivrer en sortie une puissance de courant alternatif d'un niveau de tension fixe à un redresseur (50) par l'intermédiaire d'une première borne de sortie et d'une deuxième borne de sortie, et pour une puissance de courant continu reçue, délivrer en sortie la puissance de courant continu reçue à une deuxième borne d'un module d'inducteur (20) par l'intermédiaire d'une troisième borne de sortie ; dans lequel un nombre de types de la puissance de courant alternatif est N, un nombre de types de puissance de courant continu est M, et N ≥ 2, M ≥ 2 ;
le module d'inducteur (20), présentant une première borne connectée à une première borne de sortie du redresseur (50), une deuxième borne connectée à une première borne d'un premier condensateur et à la troisième borne de sortie du module de transformation (10), et une troisième borne connectée à une première borne d'une unité de commutation cible (30), dans lequel le module d'inducteur (20) est configuré pour, lorsque le module de transformation (10) reçoit une k^{ième} puissance de courant alternatif, connecter une première borne du module d'inducteur (20) à la deuxième borne du module d'inducteur (20), et réguler une inductance équivalente entre la première borne du module d'inducteur (20) et la deuxième borne du module d'inducteur (20) à une inductance équivalente prédéfinie correspondant à la k^{ième} puissance de courant alternatif, dans lequel k est un nombre entier et N ≥ k ≥ 1 ;
un commutateur cible (40), présentant une première borne connectée à une deuxième borne de sortie du redresseur (50) et une deuxième borne connectée à la terre ;
le premier condensateur, présentant une deuxième borne connectée à la deuxième borne de sortie du redresseur (50) ;
un post-circuit (60), présentant une première borne d'entrée connectée à la première borne de sortie du redresseur (50) et une deuxième borne d'entrée connectée à la deuxième borne de sortie du redresseur (50), et le post-circuit (60) est configuré pour alimenter une charge en puissance ;
l'unité de commutation cible (30), présentant une deuxième borne connectée à une deuxième borne d'entrée du redresseur (50), dans lequel le commutateur cible (40) et l'unité de commutation cible (30) sont activés seulement lorsque le module de transformation (10) reçoit la puissance de courant continu ; et
le redresseur (50), configuré pour, pour différentes puissances de courant continu reçues par le module de transformation (10), commander un état activé/désactivé d'un dispositif de commutation du redresseur (50) selon une règle, pour fournir une tension d'un niveau fixe au post-circuit (60),
dans lequel le module de transformation (10) comprend :
un transformateur de traction, dans lequel une première borne d'un enroulement primaire du transformateur de traction fonctionne comme la première borne d'entrée du module de transformation (10) et est connectée à l'entrée de courant alternatif, une deuxième borne de l'enroulement primaire est connectée à la terre, et un enroulement secondaire du transformateur de traction est disposé de manière séquentielle avec N+1 bornes ; et
des N+1 commutateurs connectés respectivement aux N+1 bornes de l'enroulement secondaire du transformateur de traction,
**caractérisé en ce que** :
le module d'inducteur (20) est également configuré pour, si le module de transformation (10) reçoit les M types de la puissance de courant continu, déconnecter la première borne du module d'inducteur (20) de la deuxième borne du module d'inducteur (20), et connecter la deuxième borne du module d'inducteur (20) à la troisième borne du module d'inducteur (20) ;
la N+1^{ième} borne de l'enroulement secondaire fonctionne comme la deuxième borne d'entrée du module de transformation (10) et est connectée à l'entrée de courant continu, la première borne de l'enroulement secondaire fonctionne comme la troisième borne de sortie du module de transformation (10), la première borne de l'enroulement secondaire et la première borne de l'enroulement primaire sont des bornes homonymes du transformateur de traction ;
dans lequel une première borne d'un premier commutateur est connectée à la première borne de l'enroulement secondaire, une deuxième borne du premier commutateur fonctionne comme la première borne de sortie du module de transformation (10) et est connectée à la première borne d'entrée du redresseur (50), une première borne d'un i^{ième} commutateur est connectée à la j^{ième} borne de l'enroulement secondaire, et une deuxième borne du i^{ième} commutateur est connectée à la deuxième borne d'entrée du redresseur (50), dans lequel i est un nombre entier et 2 ≤ i ≤ N+1 ; et
des tensions d'un premier de n^{ièmes} types de puissance de courant alternatif reçue par le module de transformation (10) diminue de manière séquentielle, et le premier commutateur est activé seulement lorsque la puissance de courant alternatif est reçue par le transformateur de traction, et le i^{ième} commutateur est activé seulement lorsque le i-1^{ième} type de la puissance de courant alternatif est reçue par le transformateur de traction.

2. Système de conversion de puissance à courants multiples destiné à être utilisé avec un train selon la revendication 1, dans lequel le module d'inducteur (20) comprend :
N unités d'inducteur, dans lequel une deuxième borne d'une j^{ième} unité d'inducteur est connectée à une première borne d'une j-1^{ième} unité d'inducteur, dans lequel j est un nombre entier et 2 ≤ j ≤ N ; une deuxième borne d'une première unité d'inducteur fonctionne comme la deuxième borne du module d'inducteur (20) ; une première borne d'une N^{ième} unité d'inducteur fonctionne comme la troisième borne du module d'inducteur (20) ; et
N unités de commutation, dans lequel une première borne d'une m^{ième} unité de commutation est connectée à une première borne d'une m^{ième} unité d'inducteur, et une deuxième borne de la m^{ième} unité de commutation est connectée à la première borne de sortie du redresseur (50), où m est un nombre entier et 1 ≤ m ≤ N ; la m^{ième} unité de commutation est activée seulement lorsque le m^{ième} type de la puissance de courant alternatif est reçu par le module de transformation (10).

3. Système de conversion de puissance à courants multiples destiné à être utilisé avec un train selon la revendication 2, dans lequel N des commutateurs et le commutateur cible (40) sont tous disposés dans un premier boîtier de commutateur d'isolation, et les N unités de commutation et l'unité de commutation cible (30) sont toutes disposées dans un deuxième boîtier de commutateur d'isolation.

4. Système de conversion de puissance à courants multiples destiné à être utilisé avec un train selon la revendication 1, dans lequel N est égal à 2 et M est égal à 2.

5. Système de conversion de puissance à courants multiples destiné à être utilisé avec un train selon la revendication 1, comprenant en outre :
un circuit onduleur auxiliaire présentant une première borne d'entrée connectée à la première borne de sortie du redresseur (50) et une deuxième borne d'entrée connectée à la deuxième borne de sortie du redresseur (50).

6. Système de conversion de puissance à courants multiples destiné à être utilisé avec un train selon la revendication 5, comprenant en outre :
un circuit de retour sans énergie, présentant une première borne d'entrée connectée à la première borne de sortie du redresseur (50) et une deuxième borne d'entrée connectée à la deuxième borne de sortie du redresseur (50).

7. Système de conversion de puissance à courants multiples destiné à être utilisé avec un train selon l'une quelconque des revendications 1 à 6, dans lequel le redresseur (50) est un redresseur à quatre quadrants (50).

8. Système de conversion de puissance à courants multiples destiné à être utilisé avec un train selon la revendication 7, dans lequel le redresseur à quatre quadrants (50) est un redresseur à quatre quadrants PWM (50).

9. Train comprenant le système de conversion de puissance à courants multiples pour un train selon l'une quelconque des revendications 1 à 8.
